# EUROPEAN PATENT APPLICATION

(11) **EP 4 345 360 A1**
(43) Date of publication of application: **03.04.2024**
(21) Application number: 23199138.1
(22) Date of filing: 22.09.2023
(51) Int. Cl.: F17C 1/00, B60K 15/03

(54) **IMPROVED TANK ARRANGEMENT FOR CRYOGENIC FLUID**

(30) Priority: 27.09.2022 IT 202200019845
(71) Applicant: CNH Industrial Italia S.p.A., 10156 Torino (IT)
(72) Inventor: HOLLAND, Matthew, Basildon SS14 3AD (GB)
(74) Representative: CNH Industrial IP Department

(57) **Abstract**

Tank arrangement (1) for storing a cryogenic fluid for a vehicle, extending along a longitudinal axis (A) and comprising a first tank (2) provided with a wall defining a first space (4') isolated from the environment and a second tank (3) housed within first space (4') and provided with a wall defining a second space (4") isolated from the first space (4'), the tank arrangement (1) comprising a plurality of support arrangements (5) configured to connect said first tank (2) to said second tank (3) each providing a respective support point between the walls.

## Description

### TECHNICAL FIELD

The present invention concerns a tank arrangement for storing cryogenic fluid.

The present invention finds its preferred, although not exclusive, application in work vehicles such as agricultural vehicle. Reference will be made to this application by way of example below.

### BACKGROUND OF THE INVENTION

In order to reduce emissions, different fluids are used as fuel for allowing the operations of vehicles such as agricultural vehicles. For instance, natural liquified gas (LNG) or compressed natural gas (CNG) are used for internal feeding combustion engines or hydrogen is used for feeding fuel cell modules.

The aforementioned fluids need to be maintained at very low temperatures in order to allow to store sufficient mass of fluid to guarantee a sufficient operativity of the vehicle.

However, it is clear that the maintenance of a tank a very low temperature is a crucial point in order to avoid overheating of the fluid that may lead to a pressure increase in the tank and to a consequent explosion and to reduce energetic losses.

It is therefore known to provide a double tank arrangement wherein an outer tank houses internally an inner tank configured to store the cryogenic fluid.

The inner tank is usually supported via an internal support structure or by wrapping an insulating material. The space between the outer and inner tank is then aspirated in order to generate vacuum. In this way, a super insulation is provided in order to reduce at minimum thermal bridges that may allow thermal exchange with the environment.

However, it is clear that the above-mentioned solutions lead to a complicated mounting of the tank arrangement and, moreover, the presence of inner structure/ material reduces the useful space for the inner tank, thereby reducing the possibility of storing cryogenic fluid.

Therefore, the need is felt to provide a double tank arrangement for storing a cryogenic fluid that increase the capacity of the inner tank without decreasing the thermal properties of existing arrangements.

An aim of the present invention is to satisfy the above-mentioned needs in a cost-effective and optimized manner.

### SUMMARY OF THE INVENTION

The aforementioned aim is reached by a tank arrangement and a vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of a tank arrangement according to the invention;
- Figure 2 is a perspective exploded view of the tank of figure 1; and

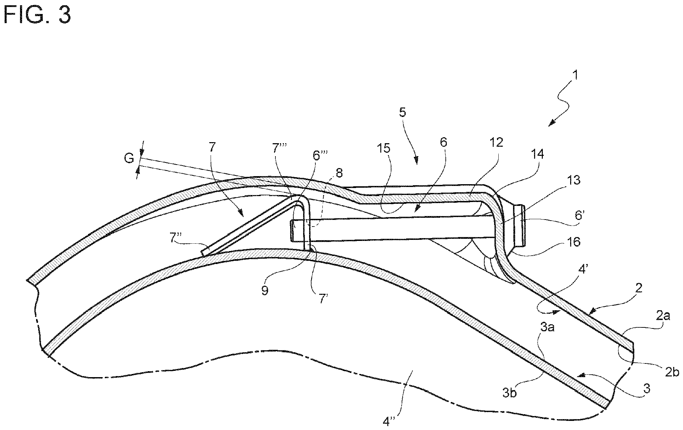

- Figure 3 is an enlarged sectioned view of a portion of the tank according to the invention.

### DETAILED DESCRIPTION OF THE INVENTION

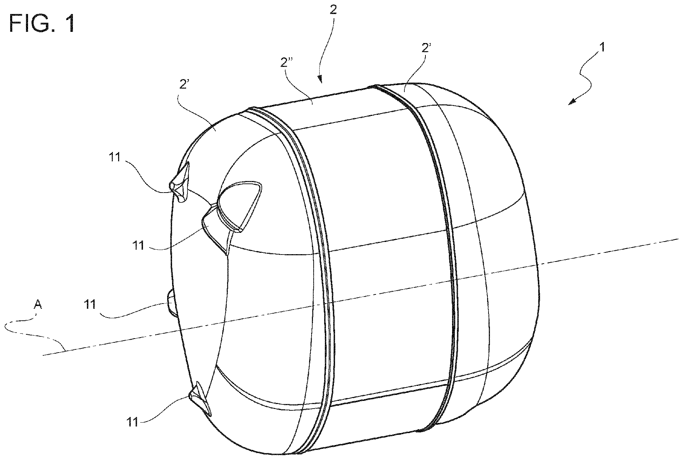

Figure 1 shows a tank arrangement 1 for a vehicle (not shown) such as an agricultural vehicle and configured to store a cryogenic fluid that could be used to feed a power generator, such as an internal combustion engine or a fuel cell module of the vehicle.

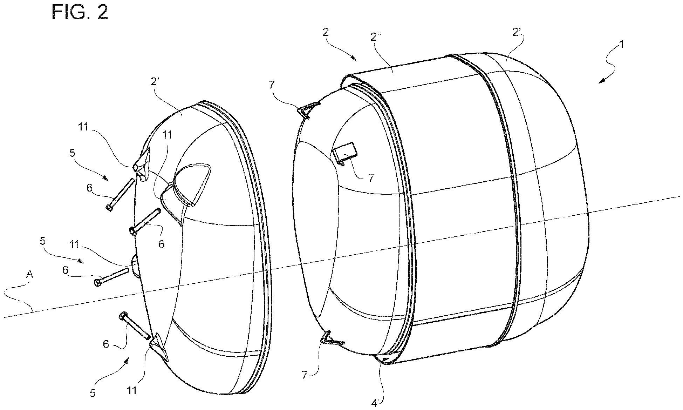

As better shown in combination with figure 2, the tank arrangement 1 comprises a first, outer, tank 2 and a second, inner, tank 3.

The first tank 2 is dimensioned to define a space 4' configured to house the second tank 3. This latter is configured to define a space 4" configured to house a cryogenic fluid.

Accordingly, the first tank 2 comprises a wall, for instance realized in metallic material, that defines an external surface 2a faced to environment and an internal surface faced to the second tank 3 and similarly the second tank 3 comprises a wall, for instance realized in metallic material, that defines an external surface 3a faced to the first tank 3 and an internal surface 3b at contact with the cryogenic fluid.

In the disclosed exemplarily embodiment the first and the second tanks 2, 3 are realized by different wall portions that are coupled along a longitudinal axis A of the tank arrangement 1.

In particular, the first tank 2 comprises a pair of head portions 2' and an intermediate portion 2" that are connectable together by coupling along longitudinal axis A direction. The second tank 3 may be realized in a similar manner and will be not described for sake of brevity.

According to the invention, the inner tank 3 is carried by the second tank 2 via a plurality of support arrangements 5 configured to connect the tanks 2, 3 together each providing a respective support point between their respective walls. In other words, the walls of the first and second tanks 2, 3 are physically separated one with respect to the other except for the connection points defined by the support arrangements 5.

In particular, the tank arrangement 1 comprises a first plurality of support arrangements 5 and a second plurality of support arrangements 5 placed one opposite to the other along longitudinal axis A direction.

Furthermore, each plurality of support arrangements 5 comprises at least a pair of support arrangements 5 placed vertically opposite one with respect to the other and at least a pair of support arrangements 5 placed transversally opposite one with respect to the other. The vertical and transversal directions are referred with respect to respective axis both perpendicular to said longitudinal axis A.

Accordingly at least six support arrangements 5 should be present to compensate all torques acting between first and second tanks 2, 3. In the disclosed embodiments eight support arrangements 5 are present, four opposite to the other along longitudinal direction and two-by two opposite along transversal and vertical directions.

Advantageously, each support arrangement 5 comprises a longitudinal element 6 and a bracket element 7 coupled together to define the support point between the first and the second tanks 2, 3.

In particular, the longitudinal element 6 extends along the longitudinal axis A and is oriented substantially tangential to the second tank outer surface 3a.

Preferably, the longitudinal element 6 comprises a pin or a rod or a wire any suitable longitudinal shape structural element. In particular, the longitudinal element 6 is realized in a thermal insulating material such as a polymer such as an aramid fiber, e.g. Kevlar.

The longitudinal element 6 comprises a first extremity 6' that is placed outside the first tank 2 and a second extremity 6" that cooperates with the bracket element 7 inside the space 4'.

The bracket element 7 is shaped to define two contact points with the second tank 3.

Preferably, the bracket element 7 may be L-shaped, i.e. comprising two segments 7', 7" connected by a joint portion 7‴. In the disclosed embodiment the joint portion

One of the segments 7', 7'' further defines an opening 8 configured to house the second extremity 6" of the longitudinal element 6. In detail such segment 7' is the shorter one between the two segments 7', 7''. In further detail, such segment 7' is substantially normal to external surface 3a of the inner tank 3.

According to the shown embodiment, the second segment 7" is therefore inclined with respect to the first segment 7' and has a greater length. The joint portion 7" ' has preferably a curved shape.

The two contacts points are spaced one with respect to the other along longitudinal axis A direction; in particular, the joint portion 7" ' is substantially at the same position along such direction with respect to the contact point defined by the first segment 7'.

Furthermore, it is noticed that the joint portion 7‴ is spaced from the first tank 2 via of a distance G. Such distance G is function of the length of the longitudinal element 6 and of segments 7', 7'' and is suitable for avoiding a thermal bridge between tanks 2, 3.

The second tank 3 may comprise a coupling portion 9, e.g. a hook portion or a leaf portion, configured to cooperate at contact with the first segment 7' (or with an opening realized therein) to allow the maintenance in a fixed position of the bracket 7 on the second tank 3 during the mounting of the tank arrangement 1.

Advantageously, the first tank 2 defines a plurality of seats 11 each configured to provide support for the respective longitudinal element 6 of the support arrangement 5. In particular, the seats 11 are realized in the head portions 2'.

In detail each seat 11 comprises a tangential wall 12 and a substantially radial wall 13 that are jointly coupled together substantially perpendicular one with respect to the other. Preferably, the two walls 12, 13 are coupled via a joint portion 14 that is advantageously shaped curved.

The tangential wall 12 defines a space portion 15 that is integrated in space 4' and that houses the intermediate portion of longitudinal element 6 between the above mentioned extremities 6', 6". The radial wall 13 defines instead a coupling portion 16 for the first extremity of the longitudinal element 6.

In particular, such coupling portion 16 may allow coupling, e.g. by shape or threaded connection, and to allow further sealing by weld. To facilitate the above welding, the first extremity of the longitudinal element 6 may be realized in metallic material.

The operation of the embodiment of the invention as described above is the following.

During the operation of the vehicle, the second tank 3 stores the cryogenic fluid in the space 4". The second tank 3 is maintained in position within space 4' by support arrangements 5 that compensate the movement imparted by first tank 2 due to vehicle motion and by second tank 3 due to fluid motion. Indeed, the peculiar disposition symmetric about longitudinal, vertical, and transversal axis allow to compensate each force and torque about these latter.

During the mounting of the tank arrangement 1 it is sufficient to place the brackets 7 on the inner tank, couple the head portions 2' to the intermediate portion 2'' and insert the longitudinal element 6 within the respective seat 11. The disassembly of the tank arrangement 1 follows the same, inverted, operations.

In view of the foregoing, the advantages of a tank arrangement and a vehicle according to the invention are apparent.

Thanks to the proposed arrangement it is possible to provide a super insulation between the first and the second tank without decreasing the useful space within the first tank and without adding thermal bridges.

Therefore, the storing space of the first tank is increased and the super insulation properties are even improved with respect to existing arrangements.

The above is further increased via the presence of the seats that allows a tangential arrangement of the longitudinal element with respect to the first tank.

Moreover, the use of symmetric disposition along longitudinal, transversal, and vertical direction of the support arrangements allows to provide a very stable coupling between the first and the second tanks.

Furthermore, the proposed system is very economic and foresees the use of very few elements for providing support arrangements and very few machining operation in first or second tanks for allowing their used.

Moreover, the proposed support arrangements do not lead to high stress concentrations, thereby reducing the possibility of failures due to pression in the tanks.

Indeed, the mounting and disassembly of the tank arrangement is facilitated due to the low number of components of the support arrangements and due to the presence of seats and coupling portions.

It is clear that modifications can be made to the described tank arrangement and vehicle which do not extend beyond the scope of protection defined by the claims.

For example, the shapes of the proposed tanks and of the elements of the support arrangement may vary. Similarly, the number of support arrangement may be varied.

Moreover, the material of tanks and of the elements of the support arrangement may vary.

## Claims

1. Tank arrangement (1) for storing a cryogenic fluid for a vehicle, said tank arrangement (1) extending along a longitudinal axis (A) and comprising a first tank (2) provided with a wall defining a first space (4') isolated from the environment and a second tank (3) housed within said first space (4') and provided with a wall defining a second space (4") isolated from the first space (4'), said tank arrangement (1) comprising a plurality of support arrangements (5) configured to connect said first tank (2) to said second tank (3) each providing a respective support point between said walls.

2. Tank arrangement according to claim 1, wherein said walls of said first and second tank (2, 3) are physically separated one with respect to the other except for the connection points defined by said support arrangements (5).

3. Tank arrangement according to claim 1 or 2, wherein said support arrangements (5) each comprises a longitudinal element (6) and a bracket (7), wherein said longitudinal element (6) comprises a first extremity (6') housed outside said first tank (2) and a second extremity (6'') coupled to said bracket (7), said bracket (7) being housed within said first space (4') in contact between said first tank (2) and said second tank (3).

4. Tank arrangement according to claim 3, wherein said bracket (7) defines two contact points with said second tank (3) .

5. Tank arrangement according to any of claims 3 or 4, wherein said bracket (7) is L-shaped.

6. Tank arrangement according to any of claims 3 to 5, wherein said bracket (7) defines an opening (8) for housing said second extremity (6") of said longitudinal element (6).

7. Tank arrangement according to any of claims 3 to 6, wherein said second tank (3) comprise a coupling portion (9) for allowing the connection of said bracket (7) to said wall of said second tank (3).

8. Tank arrangement according to any of claims 3 to 6, wherein said longitudinal element (6) is a rod, a pin or a wire and is realized in polymeric material.

9. Tank arrangement according to any of claims 3 to 7, wherein said longitudinal element (6) is realized in Kevlar.

10. . Tank arrangement according to any of the preceding claims, wherein said first tank (2) defines a seat (11) for housing said support arrangement (5), said seat (11) comprising a tangential wall (12) defining a space portion (15) and a radial wall (13), said space portion (15) being continuous with respect to said first space (4') and housing said longitudinal element (6), said radial wall (13) being configured to allow the coupling of said first extremity (6') of said longitudinal element (6).

11. Tank arrangement according to any of claims 3 to 10, wherein said longitudinal element (6) is disposed to be substantially tangential to the wall of said inner tank (3).

12. Tank arrangement according to claim 10 or 11, wherein at least said first tank (2) comprises a pair of head portions (2') and an intermediate portion (2") connectable together to defined said space (4'), said seats (11) being realized in said head portions (2').

13. Tank arrangement according to any of the preceding claims, comprising a first plurality of support arrangements (5) and a second plurality of support arrangements (5) that are placed opposite one with respect to the other along said longitudinal axis (A) direction.

14. Tank arrangement according to any of the preceding claims, comprising at least a pair of support arrangements (5) that are each opposite to the other along the direction of a transversal and a vertical axis, both perpendicular to said longitudinal axis (A).

15. Vehicle comprising a power generator using a fluid as fuel and comprising a tank arrangement (1) according to any of the preceding claims for storing said fluid.
